Europäisches Patentamt

**European Patent Office**

Office européen des brevets

(19)

(11) Numéro de publication: **0 270 136 B1**

(12) **FASCICULE DE BREVET EUROPEEN**

(45) Date de publication du fascicule du brevet:
**24.10.90**

(51) Int. Cl.⁵: **F03D 3/06**

(21) Numéro de dépôt: **87201656.3**

(22) Date de dépôt: **01.09.87**

(54) **Eolienne à pales articulées.**

(30) Priorité: **23.10.86 BE 6048264**

(43) Date de publication de la demande:
**08.06.88 Bulletin 88/23**

(45) Mention de la délivrance du brevet:
**24.10.90 Bulletin 90/43**

(84) Etats contractants désignés:
**AT BE CH DE ES FR GB GR IT LI LU NL SE**

(56) Documents cités:
**EP-A- 0 064 742**
**DE-C- 2 571**
**DE-C- 203 174**
**FR-A- 812 018**
**FR-A- 998 721**
**FR-A- 2 292 878**
**FR-E- 23 889**
**GB-A- 188 732**
**US-A- 2 441 635**

**PATENT ABSTRACTS OF JAPAN,**
**vol. 8, no. 177 (M-317)[1614], 15 août 1984; &**
**JP-A-59 68 573 (YOUJI TOMOHIRO) 18-04-1984**

(73) Titulaire: **Schuurwegen, Horace, Résidence Val Mosan**
**Rue de Jupille 125/7C, B-4540 Visé(BE)**

(72) Inventeur: **Schuurwegen, Horace, Résidence Val Mosan**
**Rue de Jupille 125/7C, B-4540 Visé(BE)**

(74) Mandataire: **Dellicour, Paul, Office de Brevets E.**
**Dellicour rue Fabry 18/012, B-4000 Liège(BE)**

ACTORUM AG

## Description

La présente invention concerne les éoliennes, du type constitué par un certain nombre de pales montées sur un support tournant autour d'un axe vertical.

Le but de l'invention est de réaliser une éolienne, dont la conception se prête particulièrement bien à une fabrication en série avec un matériel économique tout en obtenant un bon rendement.

Le but de l'invention est encore de réaliser une éolienne, qui peut répondre instantanément à tous les caprices du vent horizontal, que ceux-ci soient de vitesse ou d'orientation.

L'invention est basée sur le phénomène de l'action du vent sur une pale composée de deux lames à surface plane, quelle que soit sa forme, dans un courant d'air régulier, cette action qui se décompose en deux forces à savoir la poussée à l'avant et la traînée à l'arrière. Pour des angles faibles entre les deux lames la poussée croît rapidement, alors que la traînée croît au contraire lentement ce qui est confirmé par la rotation d'une éolienne par un vent faible.

Une éolienne suivant l'invention est du type constitué par un certain nombre de pales montées sur un support tournant autour d'un axe vertical, chaque pale étant formée par une paire de lames réunies entre elles à la manière d'une charnière, dont l'axe de rotation est relié à un bras horizontal du support tournant et dont les lames en position de repos sont disposées sensiblement horizontalement chaque pale étant montée du même coté sur son bras de support.

La disposition en V des deux lames formant la pale double présente l'avantage de la décomposition des forces poussées et traînées.

Une telle réalisation de pales articulées est connue par la roue hydraulique du brevet WO-A 8 300 538 ou l'éolienne des brevets DE-C 854 330, US-A 2 314 612 et US-A 2 441 635.

Il a paru avantageux suivant l'invention de conformer de telles pales articulées dans une éolienne de manière à leur donner l'apparence d'une aube de turbine et à favoriser la poussée du vent et la vitesse circonférentielle.

Pour réaliser ce but une éolienne à pales articulées est caractérisée suivant l'invention en ce que le bord libre des lames formant une pale présente un profil incurvé tel que la surface de la lame va en diminuant vers l'extrémité opposée au support tournant.

Suivant l'invention ce profil incurvé est calculé de telle manière que le couple partant du centre du support tournant est constant sur toute la longueur des pales.

D'autres détails ressortiront de la description qui suit de l'invention, basée sur les dessins schématiques annexés, à titre d'exemple uniquement, montrant en :

Figure 1 une vue en plan d'une éolienne suivant l'invention, au repos ;

Figures 2 et 3 respectivement une vue en élévation et une coupe par 3-3 de figure 2 d'une pale dont les lames de charnière sont au repos et, en traits interrompus, à ouverture maximale ;

Figure 4 une vue en plan d'une lame de pale, où est représenté le calcul du profil.

Figures 5 et 6A, 6B trois schémas d'équilibrage des lames d'une pale ;

Figure 7 une schématisation d'une éolienne à plusieurs étages, et

Figure 8 un exemple de réalisation destiné à accumuler l'énergie variable de l'éolienne.

Comme on le voit aux dessins l'éolienne est constituée d'un mât vertical 1, sur lequel est monté de manière à pouvoir tourner un support 2 pourvu de bras 3 s'étendant radialement par rapport au mât. Sur chacun de ces bras 3 est fixée une pale.

Chaque pale est formée par une paire de lames 4,4' réunies entre elles à la manière d'une charnière et ces lames sont montées sur le bras 3 à l'endroit de leur axe de rotation 5. Ces pales 4,4' sont disposées sensiblement horizontalement, toutes du même coté des bras 3.

On utilise avantageusement des lames légères, formant la pale, pour répondre à la poussée d'un vent léger, compte tenu que pour un vent plus fort et continu ces lames légères se stabiliseront dans une position idéale.

Pour simplifier les explications cet ensemble est appelé un étage, étant donné que plusieurs étages peuvent être disposés en hauteur sur un même axe vertical.

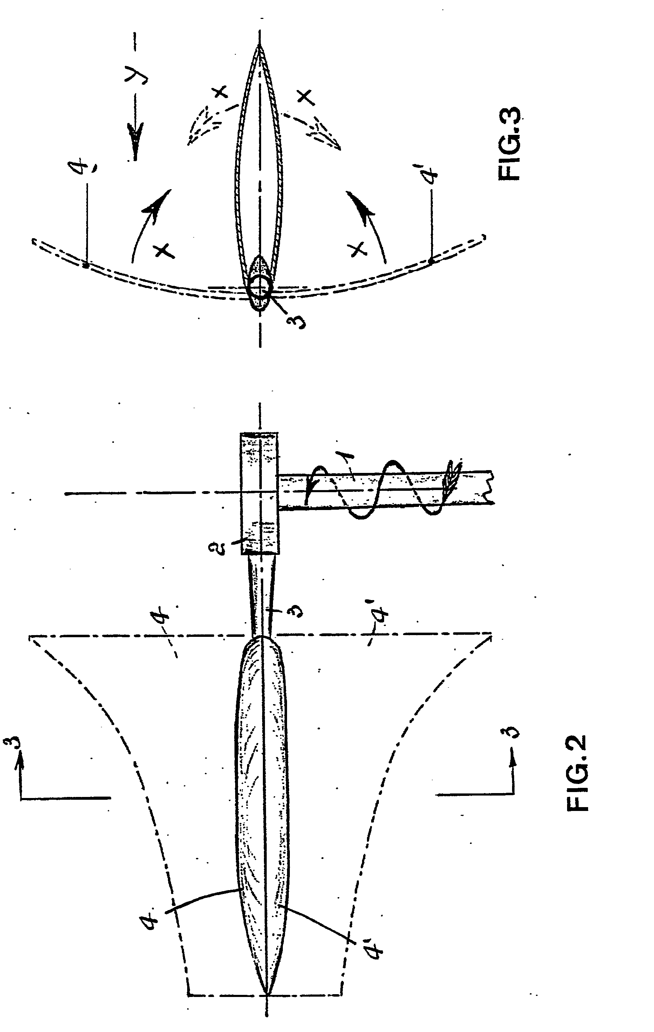

L'objectif étant de réduire la résistance de la traînée et d'absorber le maximum de la poussée du vent il est avantageux de donner aux pales et aux supports un profil aérodynamique (figures 2 et 3).

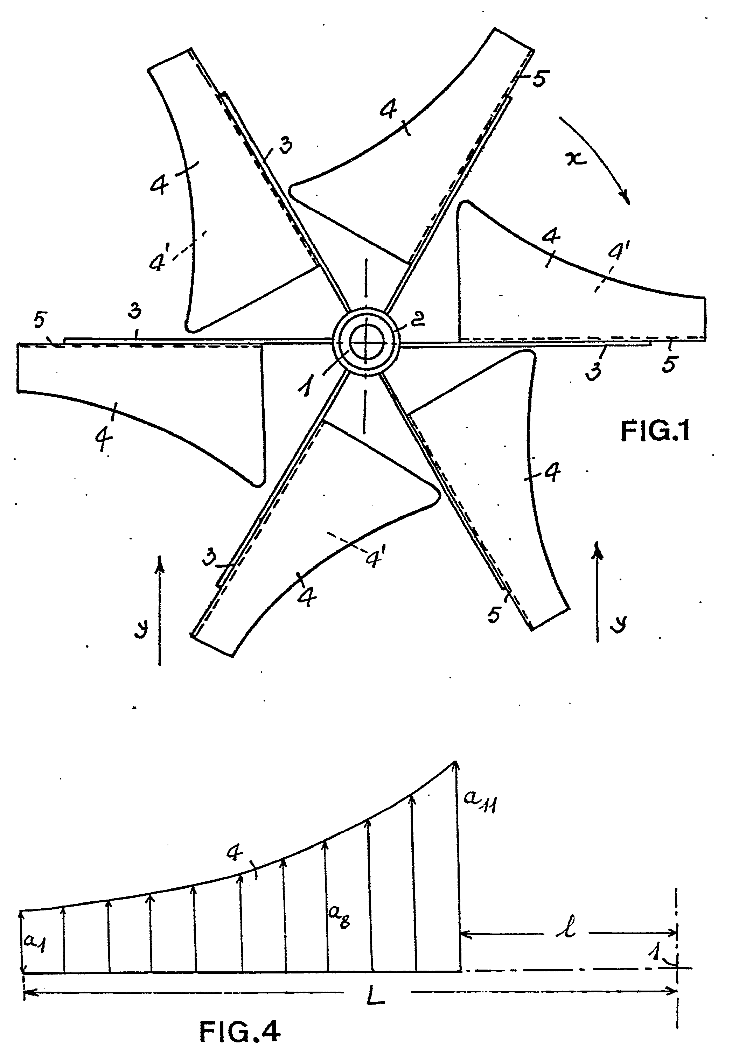

Au repos les lames 4,4' peuvent être maintenues initialement suivant un angle $\alpha$ bien défini et en équilibre par des ressorts en charnière, qui permettront aux lames de se déplacer dans le sens (flèche x) imposé par le vent (flèche y), soit en ouverture, soit en fermeture (figure 1).

Suivant l'invention des lames 4,4' ont un profil incurvé tel que la surface de la lame va en diminuant vers l'extrémité opposée au support tournant 2.

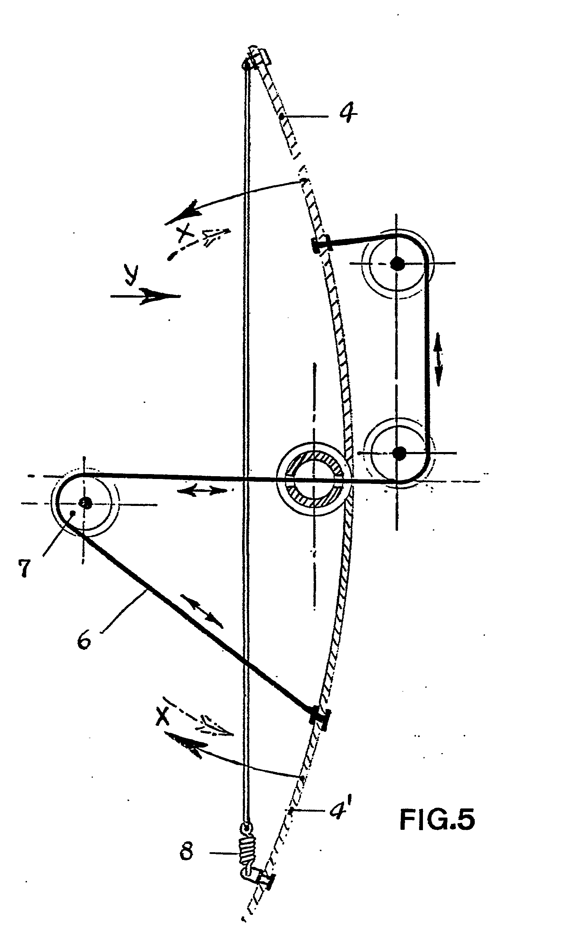

Pour obtenir le meilleur résultat avec des pales d'éolienne ainsi conformée, il a paru avantageux de calculer l'incurvation de telle manière que le couple partant du centre du support tournant 2 soit constant sur toute la longueur d'une pale, c'est-à-dire : $a11 \times l = a1 \times L$ (figure 4). Ainsi est obtenue l'apparence d'une aube de turbine pour chaque pale.

Le profil des lames tel que représenté aux dessins peut entraîner des frais relativement élevés lors de la fabrication et, par suite, il est bien entendu que les lames pourraient se présenter sous une forme moins profilée et être constituées, par exemple, par une portion de lame a1-a8 au lieu de a1-a11 (figure 4).

En fonctionnement la vue de profil de l'ensemble du support se caractérise par l'ouverture des lames face au vent et la fermeture des autres lames, ouverture et fermeture commandées par le vent lui-même suivant un niveau horizontal transmettant à l'ensemble de l'appareil la puissance souhaitée.

En cas de travail sur l'éolienne ou par un vent violent, afin d'éviter un accident ou la destruction de l'appareil, il est prévu suivant l'invention un système de verrouillage des lames dans la position α = 0.

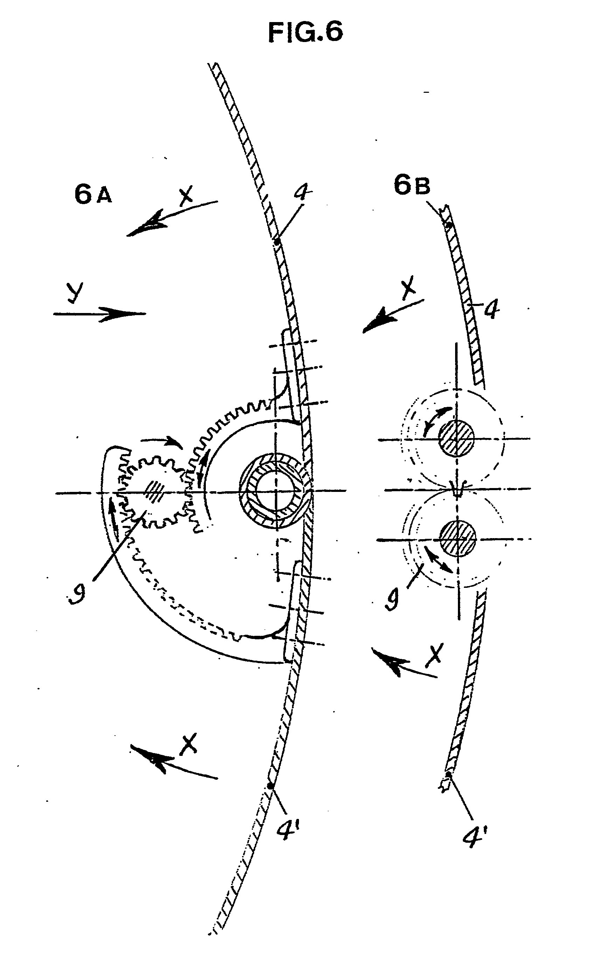

Pour obtenir une fermeture et une ouverture simultanées des lames même pour un vent minimum il est prévu de monter l'éolienne avec un équilibrage des lames. On en donne un exemple dans la figure 5 avec un équilibrage par câble 6, poulies 7 et ressort amortisseur 8 pour des appareils de faible puissance et dans la figure 6 avec un équilibrage par engrenages 9 et amortisseurs hydrauliques pour des appareils de grande puissance.

Une éolienne suivant l'invention peut être constituée par un support unique 2 avec bras 3 et pales 4,4' appelé étage mais elle peut aussi se composer de plusieurs étages sur le même axe vertical 1.

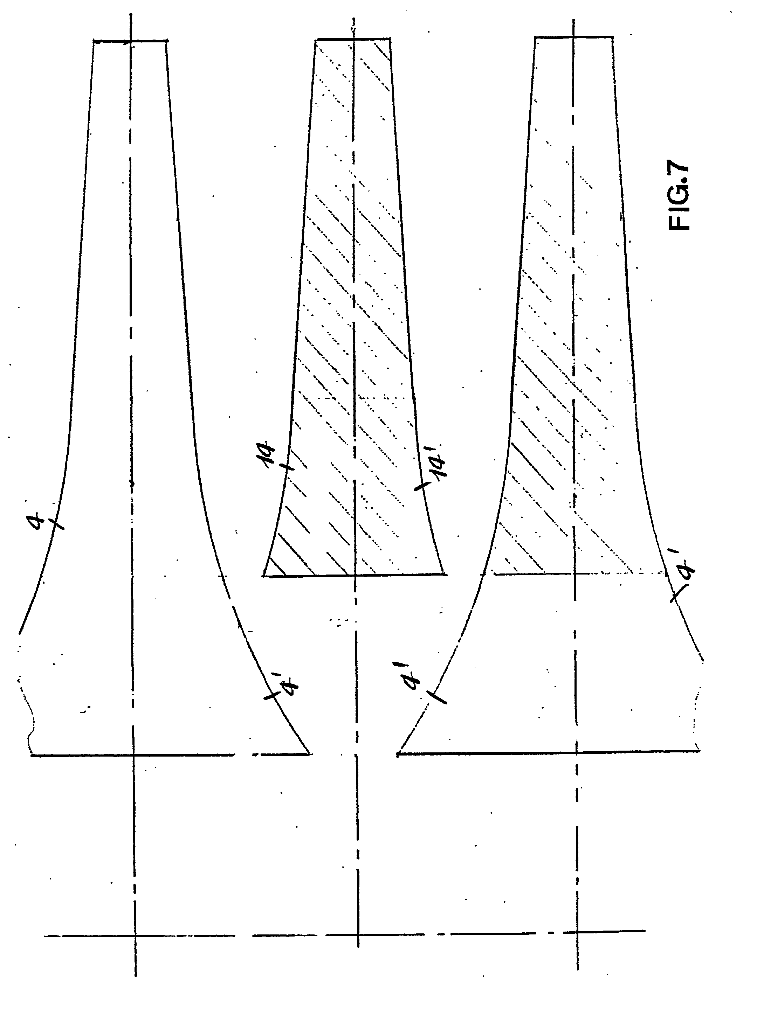

On voit en figure 7 une schématisation de plusieurs étages, les pales étant ouvertes au vent. Dans le but d'augmenter la surface sans modifier la vitesse, il est encore prévu d'intercaler entre deux étages un étage intermédiaire, dont la forme de la pale 14,14' est une réplique exacte d'une portion de pale complète 4,4'.

On peut encore prévoir une éolienne conforme à l'invention constituée de, par exemple, trois ensembles constitués chacun d'un support 2, de bras 3 et de pales 4,4' comme en figure 1, chaque ensemble étant monté sur un bras fixe assemblé radialement sur un pylone fixe.

Pour augmenter le rendement de l'appareil on place avantageusement une girouette commandant par un système connu l'ouverture et la fermeture des pales dans une portion de cercle le plus favorable pour absorber le maximum de l'énergie du vent.

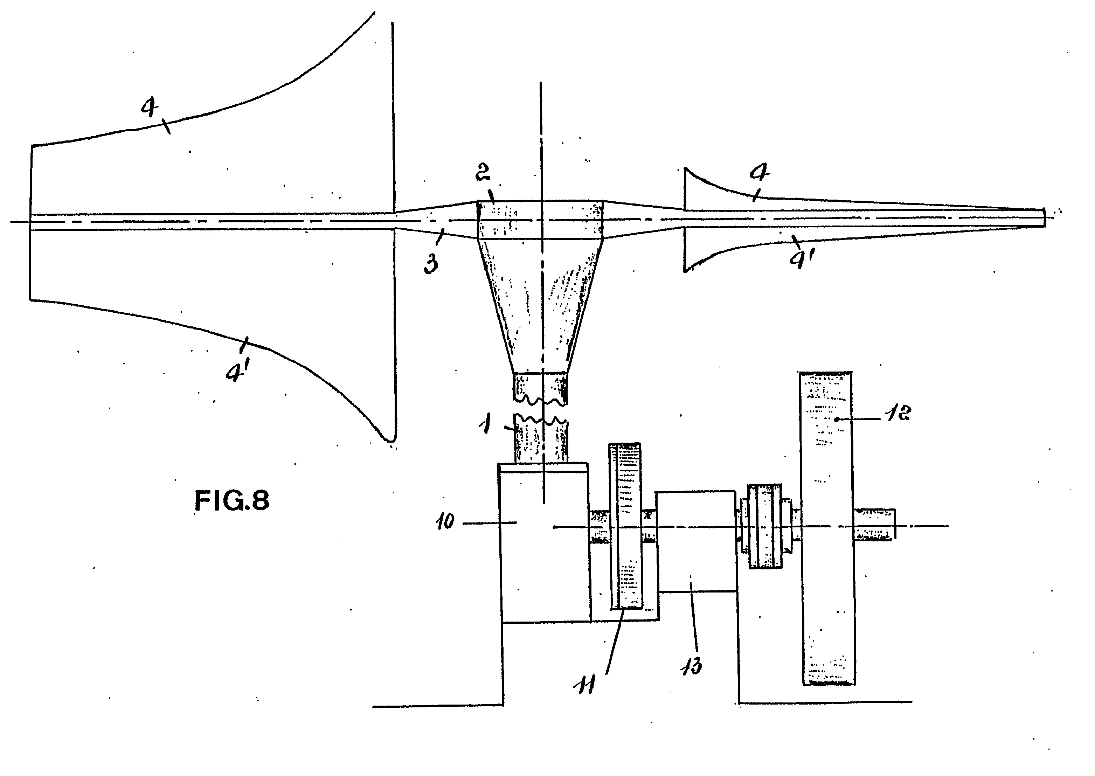

Afin d'obtenir plus de souplesse et de régularité pour des appareils de faible puissance, l'énergie variable de l'éolienne est accumulée (figure 8) grâce à un réducteur 10 dans un ressort en spirale 11 libérant son énergie cumulée à un volant 12 par l'intermédiaire d'une boîte de vitesse appropriée 13, l'énergie du volant 12 étant utilisable par intermittence.

## Revendications

1. Eolienne à axe de rotation vertical, à pales articulées, du type dans lequel chaque pale est formée par une paire de lames (4, 4') réunies entre elles à la manière d'une charnière, dont l'axe de rotation (5) est relié au bras horizontal (3) d'un support tournant (2) et dont les lames (4, 4') en position de repos sont disposées sensiblement horizontalement, chaque pale étant montée du même côté sur son bras de support, caractérisée en ce que le bord libre des lames (4, 4') présente un profil incurvé tel que la surface de la lame va en diminuant vers l'extrémité opposée au support tournant (2).

2. Eolienne suivant la revendication 1, caractérisée en ce que le profil incurvé est calculé, de telle mannière que le couple partant du centre du support tournant (2) est constant sur toute la longueur des lames (4, 4').

3. Eolienne suivant l'une quelconque des revendications 1 et 2, caractérisée en ce que des moyens d'équilibrage sont prévus pour réaliser une fermeture et une ouverture simultanées des lames de charnière constituant une pale (4, 4').

4. Eolienne suivant la revendication 3, caractérisée en ce que les moyens d'équilibrage sont constitués par un câble (6) et des poulies (7).

5. Eolienne suivant la revendication 3, caractérisée en ce que les moyens d'équilibrage sont constitués par des engrenages (9) et des amortisseurs hydrauliques.

6. Eolienne suivant l'une quelconque des revendications 1 à 5, caractérisée en ce qu'elle comporte plusieurs étages, chaque étage étant constitué d'un support (2) tournant sur l'axe central (1) avec ses bras (3) et ses pales (4,4').

7. Eolienne suivant la revendication 6, caractérisée en ce que entre deux étages est intercalé un étage intermédiaire, dont la forme des pales (14,14') est une réplique exacte d'une portion de pale complète (4,4').

8. Eolienne suivant l'une quelconque des revendications 1 à 5, caractérisée en ce qu'elle comporte plusieurs supports tournant (2) pourvus des bras (3) avec pales à charnière (4,4'), chaque support étant monté sur un bras horizontal fixe, disposé radialement par rapport à un pylone central.

9. Eolienne suivant l'une quelconque des revendications 1 à 8, caractérisée en ce que son énergie variable est accumulée grâce à un réducteur (10) dans un ressort en spirale libérant son énergie cumulée à un volant (11) par l'intermédiaire d'une boîte de vitesse appropriée (12).

## Patentansprüche

1. Windmühle mit verstellbaren Schaufeln und vertikaler Drehachse, bei der eine jede Schaufel durch ein Paar Schaufelblätter (4, 4') gebildet wird, die scharnierartig miteinander verbunden sind, deren Drehachse (5) am horizontalen Arm (3) einer drehbaren Stützvorrichtung (2) verbunden ist und deren Schaufelblätter (4, 4') in Ruhestellung im wesentlichen horizontal ausgerichtet sind, wobei eine jede Schaufel mit derselben Seite an ihrem Stützarm angebracht ist, dadurch gekennzeichnet, daß die freie Kante des Schaufelblattes (4, 4') ein gekrümmtes Profil aufweist, so daß die Oberfläche des Schaufelblattes zu ihrem der drehbaren Stützvorrichtung (2) gegenüberliegenden Ende hin abnimmt.

2. Windmühle nach Anspruch 1, dadurch gekennzeichnet, daß das gekrümmte Profil so berechnet ist, daß das vom Mittelpunkt der drehbaren Stützvorrichtung (2) ausgehende Moment über die gesamte Länge der Schaufelblätter (4, 4') konstant ist.

3. Windmühle nach einem der Ansprüche 1 und 2, dadurch gekennzeichnet, daß Ausgleichsvorrichtungen zur Durchführung einer gleichzeitigen Schließung und Öffnung der Scharnierblätter, die eine Schaufel (4, 4') bilden, vorgesehen sind.

4. Windmühle nach Anspruch 3, dadurch gekennzeichnet, daß die Ausgleichsvorrichtungen durch ein Kabel (6) und Rollen (7) gebildet werden.

5. Windmühle nach Anspruch 3, dadurch gekennzeichnet, daß die Gleichgewichtsvorrichtungen von Übersetzungen (9) und hydraulischen Dämpfungsvorrichtungen gebildet werden.

6. Windmühle nach einem der Ansprüche 1 bis 5, dadurch gekennzeichnet, daß sie mehrere Etagen umfaßt, von denen eine jede aus einer mit ihren Armen (3) und Schaufeln (4, 4') um die Mittelachse (1) drehbaren Stützvorrichtung (2) besteht.

7. Windmühle nach Anspruch 6, dadurch gekennzeichnet, daß zwischen zwei Etagen eine Zwischenetage zwischengeschaltet ist, deren Schaufelform (14, 14') eine genaue Nachbildung eines Teils der vollständigen Schaufel ist.

8. Windmühle nach einem der Ansprüche 1 bis 5, dadurch gekennzeichnet, daß sie mehrere drehbaren Stützvorrichtungen (2) umfaßt, die mit Armen (3) mit Scharnierschaufelblättern (4, 4') versehen ist, wobei eine jede Stützvorrichtung auf einem festen horizontalen Arm befestigt ist, der in Bezug auf einen Mittelmast radial ausgerichtet ist.

9. Windmühle nach einem der Ansprüche 1 bis 8, dadurch gekennzeichnet, daß ihre veränderliche Energie über ein Untersetzungsgetrieb (10) in einer Spiralfeder gespeichert wird, welche ihre gespeicherte Energie mittels eines geeigneten Getriebes (12) an ein Rad (11) abgibt.

## Claims

1. Windmill with a vertical axis of rotation with rotatable vanes of the type in which each vane is formed by a pair of blades (4, 4') connected to each other in the manner of a hinge of which the axis of rotation (5) is connected to the horizontal arm (3) of a rotating support (2) and of which the blades (4, 4') when at rest are disposed substantially horizontally, each vane being mounted on the same side on its support arm, characterized in that the free edge of the blades (4, 4') has a curved profile such that the surface of the blade decreases towards the end opposite the rotating support (2).

2. Windmill according to claim 1, characterized in that the curved profile is calculated in such a way that the torque originating at the centre of the rotating support (2) is constant all along the length of the blades (4, 4').

3. Windmill according to either of claims 1 or 2, characterized in that balancing means are provided in order to close and open simultaneously the hinge blades constituting a vane (4, 4').

4. Windmill according to claim 3, characterized in that the balancing means are composed of a cable (6) and pulleys (7).

5. Windmill according to claim 3, characterized in that the balancing means are composed of gears (9) and hydraulic dampers.

6. Windmill according to any one of claims 1 to 5, characterized in that it comprises a plurality of stages, each stage being composed of a support (2) rotating on the central axis (1) with the arms (3) and vanes (4, 4') thereof.

7. Windmill according to claim 6, characterized in that an intermediary stage is inserted between two stages, the vane shape of which (14, 14') is an exact copy of a portion of the complete vane (4, 4').

8. Windmill according to any one of claims 1 to 5, characterized in that it comprises a plurality of rotating supports (2) provided with arms (3) with hinged vanes (4, 4'), each support being mounted on a fixed horizontal arm disposed radially with respect to a central pylon.

9. Windmill according to any one of claims 1 to 8, characterized in that the variable energy thereof is accumulated by means of a reducer (10) in a spiral spring which releases its accumulated energy to a flywheel (11) by means of an appropriate gear box (12).

**FIG.1**

**FIG.4**

FIG.3

FIG.2

FIG.5

# FIG.6

FIG.7

FIG.8